# EUROPEAN PATENT APPLICATION

(11) **EP 1 707 535 A2**
(43) Date of publication of application: **04.10.2006**
(21) Application number: 06006917.6
(22) Date of filing: 31.03.2006
(51) Int. Cl.: C01F 17/00, C09K 11/77

(54) **Process for preparing precursor particles of rare earth activated barium fluorohalide phosphor**

(30) Priority: 31.03.2005 JP 2005104870; 31.03.2005 JP 2005104871; 31.03.2005 JP 2005104872
(71) Applicant: FUJI PHOTO FILM CO., LTD., Minami-Ashigara-shi, Kanagawa 250-0193 (JP)
(72) Inventor: Nakatsu, Masaharu, Ashigara-kami-gun, Kanagawa 258-8538 (JP)
(74) Representative: Klunker . Schmitt-Nilson . Hirsch

(57) **Abstract**

Precursor particles of a rare earth activated barium fluorohalide phosphor are prepared by dissolving a barium halide, barium iodide or halide other than fluoride, a rare earth atom-containing compound to give a reaction mixture, producing precursor particles by adding seed particles of barium fluorohalide to the reaction mixture or by in situ producing phosphor nuclei in the reaction mixture, and separating the precursor particles from the reaction mixture.

## Description

### FIELD OF THE INVENTION

The present invention relates to a process for preparing particles of phosphor precursor, which can be converted into phosphor particles by firing. The invention particularly relates to a process for preparing precursor particles convertible into particles of rare earth activated barium fluorohalide phosphor.

### BACKGROUND OF THE INVENTION

It is known that a rare earth activated barium fluorohalide phosphor produces spontaneous emission in the ultraviolet or visible wavelength region when exposed to radiation such as X-rays and electron beams. The phosphor is, for example, included in a radiographic intensifying screen. The intensifying screen is used in combination with a radiographic photosensitive material. The rare earth activated barium fluorohalide phosphor is also known as a stimulable phosphor. When the stimulable phosphor is exposed to radiation such as X-rays, it absorbs and stores a portion of the radiation energy. The stimulable phosphor then release the stored energy as stimulated emission when is exposed to electromagnetic wave such as visible light or infrared rays (i.e., stimulating light). Therefore, the above-mentioned barium fluorohalide phosphor can be included in a radiation image storage panel (i.e., imaging plate) for a radiation image recording and reproducing method.

The radiation image recording and reproducing method has been widely employed in practice, and it comprises the steps of: causing the stimulable phosphor contained in the radiation image storage panel to absorb radiation energy having passed through an object or having radiated from an object; sequentially exciting the stimulable phosphor with a stimulating light such as a laser beam to emit a stimulated light; and photoelectrically detecting the emitted light to obtain electric signals giving a visible reproduced radiation image. The storage panel thus processed is subjected to a step for erasing radiation energy remaining therein, and then stored for the use in the next recording and reproducing procedure. Thus, the radiation image storage panel can be repeatedly used.

In the conventional processes for preparing the rare earth activated barium fluorohalide phosphor, starting materials such as barium fluoride, barium halide, rare earth halide and ammonium fluoride are mixed under a dry condition or a wet condition (i.e., wet process), and are then fired. When the starting materials are mixed and caused to react in a liquid phase, a phosphor precursor is first obtained. The precursor is then fired to give the target phosphor. In this specification, the term of "phosphor precursor" means a compound which is turned into a phosphor after firing, which has almost the same chemical formula as the phosphor to be given by the firing, but which generally does not emit luminescence.

JP-A-10-147778 discloses a process for preparing a precursor of rare earth activated alkaline earth metal fluorohalide phosphor. In the disclosed process, first an aqueous solution of an alkaline earth metal halide other than fluoride is stirred in a reaction vessel. While the solution in the vessel is under stirring, an aqueous fluoride solution is supplied to the vessel through a pipe. Experiment No. C2 of Example 1 described in the publication is described to prepare a precursor of BaFBr_{0.8}I_{0.2}: Eu phosphor from an aqueous solution containing stoichiometrical amounts of the starting compounds.

According to a trace experiment carried out by the applicant, however, the precursor prepared in the same manner contained iodine in an amount of less than 1.0 mol% (as described later).

JP-A-2004-124025 discloses a process for preparing a precursor of a rare earth activated barium fluorohalide phosphor containing iodine. The precursor is represented by the following formula:

Ba₁₋ₐM^{II}ₐFX_{1-b}I_{b}:yM^{I}, zLn

in which M^{II} is at least one alkaline earth metal selected from the group consisting of Ca and Sr; M^{I} is at least one alkali metal selected from the group consisting of Li, Na, K, Rb and Cs; X is at least one halogen selected from the group consisting of Cl and Br; Ln is at least one rare earth element selected from the group consisting of Ce, Pr, Nd, Pm, Sm, Eu, Gd, Tb, Dy, Ho, Er, Tm, Yb and Lu; and a, b, y and z are numbers satisfying the conditions of 0≤a≤0.5, 0.01≤b<0.99, 0≤y≤0.05 and 0<z≤0.2, respectively.

In the disclosed process, a barium compound, a compound of halogen X, an iodide, a rare earth compound and, optionally, an alkaline earth metal compound and an alkali metal compound are first dissolved in an aqueous medium, to prepare a reaction mixture in which the concentration ratio of iodine ion to halogen X ion is not less than 0.30 and is ten times or more as large as the ratio of b/(1-b). An aqueous fluoride solution is then added to the reaction mixture, so as to produce and precipitate the desired phosphor precursor. The precipitated precursor is finally separated from the reaction mixture.

JP-A-2001-166096 discloses a method for modifying a crystalline structure of a precursor of an europium activated alkaline earth metal fluorohalide phosphor. The method utilizes a procedure of preparing seed particles of BaF₂ and the like by conversion in a solution containing a high concentration of BaI₂.

JP-A-2004-67965 discloses a process for preparing phosphor precursor particles which comprises the steps of continuously producing phosphor precursor particles in a mixing vessel other than a reaction vessel, and then supplying the produced phosphor precursor particles into the reaction vessel in which the precursor particles function as nuclei for the preparation of the desired phosphor precursor particles through growth or as sources for the preparation of the desired phosphor precursor particles. The precursor particles prepared by the process have the same chemical composition as the target phosphor and hence can be utilized per se as the phosphor particles. The typical phosphor disclosed in the publication is (Y, Gd)BO₃:Eu for the use as an inorganic phosphor for manufacturing a flat display.

JP-A-2004-155617 discloses a wet process for preparing an inorganic compound which comprises the steps of reacting at least one inorganic compound sparingly soluble in water and at least one inorganic compound easily soluble in water in a reaction medium, and then removing the reaction medium. In the process, both inorganic compounds are contained in the reaction medium in a concentration higher than the saturation concentration and the reaction medium is used in a minimum amount such that the reaction medium can keep fluidity of the reaction mixture containing solid material. In the working examples, it is described that a precursor of a stimulable europium activated barium fluoroiodide (BaFI:Eu) is prepared by the process comprising the steps of an solution of EuI₃ in a mixture solvent (ethanol/water=3/1) is mixed with powdery BaI₂, stirring the resulting mixture to give a slurry, mixing the slurry with powdery BaF₂, stirring the mixture to give a slurry, and then causing a reaction in the slurry. According to the study by the present inventor, both of production of nuclei for the preparation of particles and growth of the nuclei in the disclosed process take place in the same step. Further, since the rate of production of nuclei is determined by the dissolution of BaF₂ in the disclosed process, it is difficult to control variation of the particle size of the resulting phosphor particles. Thus, the process disclosed in the publication is only for the preparation of particles of small size under a high saturation condition.

Turning to the preparation of the precursor particles of barium fluorohalide phosphor (BaFX:Ln in which X is Cl and/or Br, and Ln is a rare earth element), it is necessary that the reaction mixture of barium halide (BaX₂) has such a high concentration at a low temperature and that the precipitating agent is added at such a high rate that the reaction mixture would be highly supersaturated when the precursor particles are precipitated, in order that the precipitated particles would have small sizes. If the concentration of BaX₂ in the reaction mixture is increased to enhance the supersaturation, however, the precursor particles are liable to precipitate in the form of tabular crystals and/or liable to form aggregates, which are generally seen in a small-size particle system.

Moreover, there is a problem in that it is difficult to prepare precursor particles of rare earth activated barium fluorohalide phosphor (BaFX:Ln, wherein X is halogen and Ln is rare earth element) of the same size and same form according to the known wet processes. In more detail, the production of nuclei for the phosphor precursor is greatly influenced by the condition of addition of a fluoride solution (i.e, precipitating agent), and hence such characteristics of the resulting precursor particles as size, form, and condition of monodispersion likely vary greatly. Accordingly, it is not easy to prepare the phosphor precursor particles having controlled characteristics according to the known processes.

### SUMMARY OF THE INVENTION

It is an object of the present invention to provide a process for preparing precursor particles of a rare earth activated barium fluorohalide phosphor which have well controlled characteristics.

It is another object of the invention to provide precursor particles of the rare earth activated barium fluorohalide phosphor which are monodispersed, small sized, less aggregated particles, and which are advantageously used for producing the phosphor having improved characteristics.

The applicant has studied the process for preparing precursor particles of rare earth activated barium fluorohalide phosphor. As a result, it is found that, if two or more different starting materials for preparing barium halide are used to enhance the supersaturation of reaction mixture in the step of forming the particles (particularly in the step of forming their nuclei), the prepared precursor particles are prevented from forming aggregates. The applicant has further found that, if plural barium halides including BaI₂ are used as the barium sources so as to avoid excessive increase of the concentration of a single halide species, the precursor can be prevented from forming tabular particles and precipitates in the form of monodispersed, small and less aggregating particles.

Furthermore, the applicant has found that a process for preparing phosphor precursor particles comprising a nuclei-forming step and a nuclei-growing step can be improved to give mono-dispersed phosphor precursor particles by replacing the nuclei-forming step with addition of seed particles and by growing the added seed particles in the nuclei-growing step. It is then confirmed that the improved process needs only a shortened period.

Furthermore, the applicant has found that a process for preparing phosphor precursor particles comprising a nuclei-forming step and a nuclei-growing step can be improved to give mono-dispersed phosphor precursor particles by employing powdery BaF₂ or BaF₂ in the form of slurry in the nuclei-growing step. This advantageous phenomenon is supposed to be caused by the fact that the use of BaF₂ in place of the conventional fluoride solution (i.e., precipitating agent) is effective to keep the super-saturation degree at a lower level and prohibits reformation of precursor nuclei in the nuclei-growing step. It is then confirmed that this improved process needs only a shortened period.

Accordingly, the process of the invention for preparing precursor particles of rare earth activated barium fluorohalide phosphor having well controlled characteristics are classified into the following four processes.

The first process of the invention is a process for preparing precursor particles of rare earth activated barium fluorohalide phosphor represented by the following formula (I):

Ba₁₋ₐM^{II}ₐFX:zLn (I)

in which M^{II} is at least one alkaline earth metal element selected from the group consisting of Ca and Sr; X is at least one halogen atom selected from the group consisting of Cl and Br; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving BaX₂, BaI₂, an Ln-containing compound and optionally an M^{II}-containing compound in an aqueous medium, to prepare a reaction mixture containing an iodine atom in a molar ratio of 0.30 to 0.80 based on total halogen atom contents,
(2) adding an aqueous fluoride solution to the reaction mixture, whereby precipitating precursor particles of rare earth activated barium fluorohalide phosphor in the reaction mixture, and
(3) separating the precursor particles from the reaction mixture.

In the first process of the invention, plural barium halides including BaI₂ are used as the barium sources to produce a precursor of rare earth activated barium fluorohalide phosphor. The precursor can be obtained in the form of particles which are monodispersed (namely, which have a small coefficient of variation as described later), which are small (namely, which have sizes of 5.0 *µ*m or less) and which show less aggregation. The resulting precursor particles are fired to produce a rare earth activated barium fluorohalide phosphor, which can be advantageously used for manufacturing radiation image storage panel of high quality.

The second process of the invention is a process for preparing precursor particles of rare earth activated barium fluorohalide phosphor represented by the following formula (I):

Ba₁₋ₐM^{II}ₐFX:zLn (I)

in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding seed particles of barium fluorohalide to the reaction mixture, to give a dispersion,
(3) adding an aqueous fluoride solution to the dispersion, whereby causing growth of the seed particles in the dispersion to give precursor particles of rare earth activated barium fluorohalide phosphor, and
(4) separating the precursor particles from the reaction mixture.

In the second process, the seed particles having a predetermined size and form can be employed in place of performing the nuclei-forming step in the reaction mixture. Accordingly, the desired precursor particles having well controlled size and form can be produced.

The third process of the invention is a process for preparing precursor particles of rare earth activated barium fluorohalide phosphor represented by the following formula (I):

Ba₁₋ₐM^{II}ₐFX: zLn (I)

in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of O≤a≤0.5 and 0≤z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding an aqueous fluoride solution to the reaction mixture, whereby producing nuclei of phosphor precursor in the reaction mixture,
(3) adding barium fluoride to the reaction mixture, whereby causing growth of the nuclei of phosphor precursor in the reaction mixture to give precursor particles of rare earth activated barium fluorohalide phosphor, and
(4) separating the precursor particles from the reaction mixture.

The fourth process of the invention is a process for preparing precursor particles of rare earth activated barium fluorohalide phosphor represented by the following formula (I):

Ba₁₋ₐM^{II}ₐFX:zLn (I)

in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding seed particles of barium fluorohalide to the reaction mixture, to give a dispersion,
(3) adding barium fluoride to the dispersion, whereby causing growth of the seed particles in the reaction mixture to give precursor particles, and
(4) separating the precursor particles from the reaction mixture.

In the third and fourth processes, the nuclei-forming step and the nuclei-growing step are distinctly separated from each other, and BaF₂ is used in the nuclei-growing step. Accordingly, monodispersed phosphor precursor particles having a relatively large size (such as larger than 6 *µ*m) can be prepared.

It should be noted that the component ratio of the precursor may be slightly different from that of a phosphor obtained from the precursor because the chemical composition may vary during the firing procedure for producing the phosphor.

### DETAILED DESCRIPTION OF THE INVENTION

Preferred embodiments of the processes according to the invention are set forth below.

### [First Process]

1) The reaction mixture prepared in the step (1) contains a barium atom in an amount of 1.1 to 2.3 mol/L.
2) X of BaX₂ dissolved in the step (1) is bromine.
3) The Ln-containing compound dissolved in the step (1) is a cerium compound or an europium compound.

### [Second Process]

1) The halide dissolved in the step (1) is chloride or bromide and the reaction mixture contains a barium atom in an amount of 0.6 to 2.5 mol/L.
2) The halide dissolved in the step (1) is iodide and the reaction mixture contains a barium atom in an amount of 2.5 to 5.0 mol/L.
3) The reaction mixture is subjected to a dispersing procedure during when the seed particles are added or after the seed particles are added in the step (2).
4) The reaction mixture is subjected to a ultrasonic dispersing procedure during when the seed particles are added or after the seed particles are added in the step (2).
5) The seed particles of barium fluorohalide added in the step (2) has a mean particle size in the range of 0.5 to 8.0 *µ*m.
6) The seed particles of barium fluorohalide added in the step (2) contains at least 70 molar % of a halogen atom other than a fluorine atom in total halogen atom contents.
7) The seed particles of barium fluorohalide added in the step (2) has been produced by the steps of dissolving a barium halide and a fluoro complex in an aqueous medium, and precipitating particles of barium fluorohalide in the aqueous medium.
8) The growth of the seed particles of barium fluorohalide to the precursor particles in the step (3) is 1.5 to 10 times as much as size of the seed particles.

### [Third Process]

1) The halide dissolved in the step (1) is chloride or bromide and the reaction mixture contains a barium atom in an amount of 0.6 to 2.5 mol/L.
2) The halide dissolved in the step (1) is iodide and the reaction mixture contains a barium atom in an amount of 2.5 to 5.0 mol/L.
3) The reaction mixture is kept at a temperature in the range of 20 to 95°C in the course of the steps of (1) to (3) .
4) The barium fluoride is added to the reaction mixture in the form of powder or slurry in the step (3).

### [Fourth Process]

1) The halide dissolved in the step (1) is chloride or bromide and the reaction mixture contains a barium atom in an amount of 0.6 to 2.5 mol/L.
2) The halide dissolved in the step (1) is iodide and the reaction mixture contains a barium atom in an amount of 2.5 to 5.0 mol/L.
3) The reaction mixture is kept at a temperature in the range of 20 to 95°C in the course of the steps (1) to (3).
4) The barium fluoride is added to the reaction mixture in the form of powder or slurry in the step (3).
5) The reaction mixture is subjected to a dispersing procedure during when the seed particles are added or after the seed particles are added in the step (2).
6) The reaction mixture is subjected to a ultrasonic dispersing procedure during when the seed particles are added or after the seed particles are added in the step (2).
7) The seed particles of barium fluorohalide added in the step (2) has a mean particle size in the range of 0.5 to 8.0 *µ*m.
8) The seed particles of barium fluorohalide added in the step (2) contains at least 70 molar % of a halogen atom other than a fluorine atom in total halogen atom contents.
9) The growth of the seed particles to the precursor particles is 1.5 to 10 times as much as size of the seed particles.

### [Detailed Description of First Process]

### [Particle formation]

### (1) Preparation of reaction mixture

First, barium halide (BaCl₂ and/or BaBr₂), barium iodide (BaI₂), a rare earth compound, and optionally an alkaline earth metal compound are dissolved in an aqueous medium to prepare a reaction mixture.

Examples of the rare earth compounds which are soluble in water include halides (chloride, bromide and iodide), nitrate and acetate of rare earth elements. Halides of rare earth elements are particularly preferred. The rare earth element preferably is cerium or europium, because the phosphor converted from the cerium or europium-containing precursor of the invention shows preferred emission properties.

The reaction mixture may further contain a compound of an alkaline earth metal (Ca and/or Sr) and/or a compound of an alkali metal (Li, Na, K, Rb and/or Cs), if needed. Examples of the alkaline earth metal compounds include halides, nitrate, nitrite, acetate, hydroxide, and benzoate of alkaline earth metals. Examples of the alkali metal compounds include halides, nitrate, nitrite, and acetate of alkali metals.

In a reaction vessel equipped with a stirrer, the reaction mixture is stirred with a stirrer rotated at proper revolutions per minute. In this procedure, a small amount of an acid, an alkali, alcohols or a powder of water-insoluble metal oxide fine particles may be added to the reaction mixture, if needed.

The molar ratio of iodine to the total halogen contents [namely, I/(X+I)] in the mixture is controlled to satisfy the condition of 0.30≤I/(X+I)≤0.80. The molar ratio I/(X+I) preferably satisfies the condition of 0.40≤I/(X+I)≤0.70, more preferably 0.50≤I/(X+I)≤0.60.

In the invention, BaI₂ (which has higher solubility than BaCl₂ and BaBr₂) is used in combination with BaCl₂ and/or BaBr₂ that Ba²⁺ ion is supplied in an excessive amount but, at the same time, so that Cl- and/or Br⁻ ions may be in a not too excessive amount. Therefore, the precursor prepared under the conditions can be prevented from forming tabular particles and can be obtained in the form of monodispersed, small and less aggregating particles. If the molar ratio I/(X+I) is too small, the obtained particles hardly are monodispersed and have relatively large sizes. In contrast, if the molar ratio I/(X+I) is too large, the particles precipitate in such small sizes that they are liable to aggregate.

The total concentration of barium in the reaction mixture is preferably in the range of 1.1 to 2.3 mol/L, more preferably in the range of 1.2 to 2.2 mol/L, and most preferably in the range of 1.4 to 2.0 mol/L. If the total Ba concentration is too low, the particles precipitate in large sizes. In contrast, if the Ba concentration is too high, the precipitated precursor particles are liable to be multi-dispersed, to be in the tabular shape and to form aggregates.

The temperature of the reaction mixture is generally in the range of 20°C to 95°C, preferably in the range of 30°C to 82°C, more preferably in the range of 35°C to 60°C. If the temperature is too low, the particles precipitate in such small sizes that they are liable to aggregate. In contrast, if temperature is too high, the precursor is obtained in the form of large particles. The temperature is preferably kept until the reaction is complete.

### (2) Precipitation of precursor particles

After the reaction mixture is prepared, an aqueous fluoride solution is added to the mixture maintaining the temperature, to synthesize and precipitate precursor particles of rare earth activated barium fluorohalide phosphor.

Examples of the fluorides include ammonium fluoride, hydrogen fluoride, lithium fluoride, sodium fluoride and potassium fluoride. The nature and concentration of the fluoride solution are optionally determined in consideration of the property of the target phosphor precursor.

The fluoride solution is preferably added under control of the addition rate. If two or more fluoride solutions are added according to the double-jet method or the triple-jet method, the addition rates and the order of addition can be optionally controlled. However, the solutions are preferably added simultaneously. The compounds in the reaction mixture react to form phosphor precursor particles, which then precipitate in the reaction mixture.

### [Separation of precursor particles from reaction mixture]

The particles of phosphor precursor are separated from the reaction mixture by means of, for example, suction filtration, pressure filtration, or centrifugation. The separated particles are then washed well with a lower alcohol such as methanol, ethanol or propanol to remove impurities such as salt, and then dried at a temperature of 50°C to 180°C under reduced or atmospheric pressure to evaporate water and the alcohol.

Thus, the precursor particles of rare earth activated barium fluorohalide phosphor of the formula (I) are obtained. In the formula (I), X preferably is Br, and Ln preferably is Ce or Eu, because the phosphor obtained from such precursor shows preferred emission properties (with regard to spontaneous emission as well as stimulated emission).

The precursor prepared by the first process contains iodine in an amount of less than 1.0 mol%, which means the precursor essentially contains no iodine. The iodine content in the precursor can be determined by known methods such as chemical analysis or physical measurement (e.g., powder X-ray diffraction analysis). For example, in the x-ray diffraction analysis, the iodine content is estimated on the basis of the fact that the iodine content has a linear relation to the lattice constant of the barium fluorohalide. Accordingly, first barium fluorochloride, barium fluorobromide or barium fluoroiodide is used as a standard sample to draw a working curve (or reference curve). The diffraction angle (2θ) of {hkl} face peaks given by powder of the phosphor precursor is then precisely measured, to estimate the iodine content with reference to the working curve.

The phosphor precursor prepared by the first process can be kept from forming tabular particles and can be obtained in the form of almost cubic, tetradecahedral, isotropically polyhedral or spherical particles. The precursor preferably is in the form of spherical particles.

The precursor particles prepared by the first process have a size (median diameter: Dm) of preferably 0.1 to 5.0 *µ*m, more preferably 0.2 to 2.5 *µ*m, most preferably 0.5 to 2.0 *µ*m. If the particle size is less than 0.1 *µ*m, the particles are liable to aggregate. In contrast, if the particle size is larger than 5.0 *µ*m, the precursor particles are converted into such large phosphor particles that a radiation image storage panel comprising those phosphor particles gives a reproduced radiation image of poor quality. The term of "median diameter" means a diameter at which the cumulative distribution reaches 50% of the total particles in the distribution curve (diameter versus frequency). In other words, it means a diameter positioned at the median of particle size distribution. The median diameter Dm can be preferably determined according to known particle-measurement methods such as the electrical detecting method (e.g., by means of a colter counter) and the laser scattering method.

The precursor particles obtained by the first process are on a level of aggregation generally in the range of 1.0 to 1.5, preferably in the range of 1.0 to 1.3, more preferably in the range of 1.0 to 1.2. The level of aggregation means the ratio of Dm/(mean particle diameter). The mean diameter indicates an average size of primary particles, and can be preferably measured according to permeation methods such as Blains method and Lea-Nurse method with a sub-sieve sizer. It is also possible to estimate the mean diameter from spherical nominal diameters (volume grain sizes) obtained by observing the particles as spheres on the basis of the electron micrograph. The Dm/(mean particle diameter) near to 1 means that the level of aggregation is low.

The precursor particles prepared by the first process generally show a coefficient of variation in the range of 30% or less, and hence are highly monodispersed. The coefficient of variation is preferably 20% or less, more preferably 15% or less. The term "coefficient of variation" means a percentage of deviation based on the mean diameter, and accordingly it indicates the degree of monodispersion. If the precursor particles show a large coefficient of variation (and hence are poorly monodispersed), a radiation image storage panel comprising the resultant phosphor gives a reproduced radiation image of inferior quality.

### [Detailed Description of Second Process]

### [Particle formation]

### (1) Preparation of reaction mixture

First, a barium compound, a halide other than fluoride, an Ln-containing compound and optionally an M^{II-}containing compound are dissolved in an aqueous medium, to prepare a reaction mixture.

The barium compound preferably is easily soluble in water. Examples of the barium compounds include barium acetate, barium nitrate, barium hydroxide, barium benzoate, barium chloride, barium bromide, and barium iodide. Most preferred are barium bromide and barium iodide.

Examples of halides other than fluoride include ammonium chloride, hydrogen chloride, lithium chloride, sodium chloride, potassium chloride, ammonium bromide, hydrogen bromide, lithium bromide, potassium bromide, ammonium iodide, hydrogen iodide, lithium iodide, sodium iodide, and potassium iodide. The halide can be employed singly or in combination. The halide preferably is a bromide or an iodide. More preferably, the halide is a combination of a bromide and an iodide. Most preferably, the halide is a combination of ammonium bromide and ammonium iodide.

Examples of the rare earth compounds which are soluble in water include halides (chloride, bromide and iodide), nitrate and acetate of rare earth elements. Halides of rare earth elements are particularly preferred. The rare earth element preferably is cerium or europium, because the phosphor converted from the cerium or europium-containing precursor of the invention shows preferred emission properties.

The reaction mixture may further contain a compound of an alkaline earth metal (Ca and/or Sr) and/or a compound of an alkali metal (Li, Na, K, Rb and/or Cs), if needed. Examples of the alkaline earth metal compounds include halides, nitrate, nitrite, acetate, hydroxide, and benzoate of alkaline earth metals. Examples of the alkali metal compounds include halides, nitrate, nitrite, and acetate of alkali metals.

In a reaction vessel equipped with a stirrer, the reaction mixture is stirred with a stirrer rotated at proper revolutions per minute. In this procedure, a small amount of an acid, an alkali, alcohols, a powder of water-insoluble metal oxide fine particles, a water-soluble polymer material (e.g., gelatin), and/or an anticoagulant may be added to the reaction mixture, if needed.

If the barium halide is barium chloride and/or barium bromide, the total concentration of barium in the reaction mixture is preferably in the range of 0.6 to 2.5 mol/L, more preferably in the range of 0.7 to 1.5 mol/L, and most preferably in the range of 0.8 to 1.2 mol/L. If the barium halide is barium iodide, the total concentration of barium in the reaction mixture is preferably in the range of 2.5 to 5.0 mol/L, more preferably in the range of 2.7 to 4.8 mol/L, and most preferably in the range of 2.8 to 4.5 mol/L.

The temperature of the reaction mixture is generally in the range of 20°C to 95°C, preferably in the range of 40°C to 90°C, more preferably in the range of 60°C to 82°C. The temperature is preferably kept until the reaction is complete.

### (2) Dispersion of seed particles

The seed particles of barium fluorohalide (BaFX'; X' is Cl, Br, and/or I) employed in the second process preferably is not in the form of almost cubic, tetradecahedral, isotropically polyhedral or spherical particles. The seed particle preferably are in the form of spherical particles.

The seed particles have a size (median diameter: Dm) of preferably 0.5 to 8.0 µm, more preferably 1.0 to 6.0 *µ*m, most preferably 2.0 to 4.0 *µ*m. The term of "median diameter" means a diameter at which the cumulative distribution reaches 50% of the total particles in the distribution curve (diameter versus frequency).

The seed particles of barium fluorohalide are preferably monodispersed. The seed particles generally has a coefficient of variation (which indicates the degree of monodispersion of 40% or less, preferably 30% or less, more preferably 20% or less.

The seed particles of barium fluorohalide preferably contains a halogen (X) other than fluorine in an amount of 70 mol% or higher, more preferably 90 mol% or higher, most preferably 99 mol% or higher.

The seed particles of barium fluorohalide can be favorably prepared by using a fluoro complex as the fluorine source, as is described JP-A-2004-124026. In more detail, a barium halide and a fluoro complex are dissolved in an aqueous medium to give an aqueous solution. If required, a trigger compound or a compound serving as the trigger can be added to the aqueous solution. From the aqueous solution, seed particles of barium fluorohalide precipitate in the solution, and then the seed particles are separated from the solution. According to this process, the fluoro complex uniformly decomposes in the solution to release fluoride ion (i.e., fluorine ion), and the reaction proceeds smoothly in the presence of the released fluoride ion. Therefore, the monodispersed seed particles are produced.

The fluoro complex preferably is a fluoro-boron complex. Examples of the fluoro-boron complexes include difluoro borates such as M[BF₂(OH)₂] (M is an alkali metal such as Na or K or NH₄), trifluoroboric acids H[BF₃(OH)], trifluoro borates such as M[BF₃(OH)] and M [BF₃(OCH₃)], tetrafluoroboric acid H[BF₄], tetrafluoro borates such as M[BF₄]. Preferred are H[BF₄], Na[BF₄], K[BF⁴] and NH₄ [BF₄}.

The trigger compound causes decomposition of the fluoro complex in the solution. Examples of the trigger compounds include acids such as nitric acid, sulfuric acid, phosphoric acid, acetic acid, hydrofluoric acid, hydrochloric acid, hydrobromic acid and hydroiodic acid, and alkaline solutions such as aqueous ammonia, aqueous lithium hydroxide, aqueous sodium hydroxide, and aqueous potassium hydroxide. An example of the compound serving as the trigger is urea. Urea is hydrolyzed in a solution to release ammonia (trigger). The hydrolysis of urea can be caused by adjusting the temperature or pH of the solution.

Otherwise, it is possible to release a free fluoride ion from the fluoro complex without adding the trigger compound but controlling the temperature of the fluoro complex solution, for instance, maintaining the temperature of the solution (reaction mixture) at 40°C or higher, preferably 60°C or higher, more preferably 80°C or higher.

It should be noted that seed particles of barium fluorohalide prepared by other methods also can be employed in the second process of the invention.

The seed particles are preferably prepared in a large amount showing the same characteristics.

The seed particles of barium fluorohalide are added to the aforementioned reaction mixture to produce a dispersion. The seed particles can be added to the reaction mixture in the form of powder or aqueous slurry. The powder or aqueous slurry can be subjected to a dispersing procedure in advance of adding to the reaction mixture. The dispersing procedure can be a known procedure such as mill dispersion or stirring dispersion.

The seed particles are preferably added to the reaction mixture under a specific dispersing procedure, or the reaction mixture to which the seed particles have been added are preferably subjected to specific a dispersing procedure. The specific dispersing procedure is used to mean a dispersing procedure other than simple stirring. Examples of the specific dispersing procedures include procedures using pressure under complete sealing, venturi, ejector (orifice), slit shearing stress, grinding shear stress, impact shearing stress, or nanomizer, and procedures using ultrasonic wave. The ultrasonic dispersing procedure and the procedure utilizing nanomizer are preferred.

### (3) Growth of seed particles

The seed particles in the reaction mixture are caused to grow to give the precursor particles of rare earth activated barium fluorohalide phosphor by addition of an aqueous fluoride solution while maintaining the temperature of the reaction mixture.

Examples of the fluorides include ammonium fluoride, hydrogen fluoride, lithium fluoride, sodium fluoride and potassium fluoride. The nature and concentration of the fluoride solution are optionally determined in consideration of the property of the target phosphor precursor.

The fluoride solution is preferably added under control of the addition rate. If two or more fluoride solutions are added according to the double-jet method or the triple-jet method, the addition rates and the order of addition can be optionally controlled. However, the solutions are preferably added simultaneously. The compounds in the reaction mixture react to form phosphor precursor particles over the seed particles, which then precipitate in the reaction mixture.

The growth of the seed particles of barium fluorohalide to the precursor particles in the step is preferably 1.5 to 10 times, more preferably 1.8 to 5.0 times, most preferably 2.0 to 3.5 times, as much as size of the seed particles.

### [Separation of precursor particles from reaction mixture]

The particles of phosphor precursor are separated from the reaction mixture by means of, for example, suction filtration, pressure filtration, or centrifugation. The separated particles are then washed well with a lower alcohol such as methanol, ethanol or propanol to remove impurities such as salt, and then dried at a temperature of 50°C to 180°C under reduced or atmospheric pressure to evaporate water and the alcohol.

Thus, the precursor particles of rare earth activated barium fluorohalide phosphor of the formula (I) are obtained. In the formula (I), X preferably is Br, and Ln preferably is Ce or Eu, because the phosphor obtained from such precursor shows preferred emission properties (with regard to spontaneous emission as well as stimulated emission).

The phosphor precursor prepared by the second process can be kept from forming tabular particles and can be obtained in the form of almost cubic, tetradecahedral, isotropically polyhedral or spherical particles. The precursor preferably is in the form of spherical particles.

The precursor particles prepared by the second have a size (median diameter: Dm) of preferably 1.0 to 20 *µ*m, more preferably 4.0 to 15 *µ*m, most preferably 6.0 to 12 *µ*m. If the particle size is less than 1.0 *µ*m, the particles are liable to aggregate. In contrast, if the particle size is larger than 20 *µ*m, the precursor particles are converted into such large phosphor particles that a radiation image storage panel comprising those phosphor particles gives a reproduced radiation image of poor quality. The term of "median diameter" means a diameter at which the cumulative distribution reaches 50% of the total particles in the distribution curve (diameter versus frequency). In other words, it means a diameter positioned at the median of particle size distribution. The median diameter Dm can be preferably determined according to known particle-measurement methods such as the electrical detecting method (e.g., by means of a colter counter) and the laser scattering method.

The precursor particles prepared by the second process generally show a coefficient of variation in the range of 30% or less, and hence are highly monodispersed. The coefficient of variation is preferably 20% or less, more preferably 15% or less. The term "coefficient of variation" means a percentage of deviation based on the mean diameter, and accordingly it indicates the degree of monodispersion. If the precursor particles show a large coefficient of variation (and hence are poorly monodispersed), a radiation image storage panel comprising the resultant phosphor gives a reproduced radiation image of inferior quality.

### [Detailed Description of Third and Fourth Processes]

### [Particle formation]

### (1) Preparation of reaction mixture

First, a barium compound, a halide other than fluoride, an Ln-containing compound and optionally an M^{II}containing compound are dissolved in an aqueous medium, to prepare a reaction mixture.

The barium compound preferably is easily soluble in water. Examples of the barium compounds include barium acetate, barium nitrate, barium hydroxide, barium benzoate, barium chloride, barium bromide, and barium iodide. Most preferred are barium bromide and barium iodide.

Examples of halides other than fluoride include ammonium chloride, hydrogen chloride, lithium chloride, sodium chloride, potassium chloride, ammonium bromide, hydrogen bromide, lithium bromide, potassium bromide, ammonium iodide, hydrogen iodide, lithium iodide, sodium iodide, and potassium iodide. The halide can be employed singly or in combination. The halide preferably is a bromide or an iodide. More preferably, the halide is a combination of a bromide and an iodide. Most preferably, the halide is a combination of ammonium bromide and ammonium iodide.

Examples of the rare earth compounds which are soluble in water include halides (chloride, bromide and iodide), nitrate and acetate of rare earth elements. Halides of rare earth elements are particularly preferred. The rare earth element preferably is cerium or europium, because the phosphor converted from the cerium or europium-containing precursor of the invention shows preferred emission properties.

The reaction mixture may further contain a compound of an alkaline earth metal (Ca and/or Sr) and/or a compound of an alkali metal (Li, Na, K, Rb and/or Cs), if needed. Examples of the alkaline earth metal compounds include halides, nitrate, nitrite, acetate, hydroxide, and benzoate of alkaline earth metals. Examples of the alkali metal compounds include halides, nitrate, nitrite, and acetate of alkali metals.

In a reaction vessel equipped with a stirrer, the reaction mixture is stirred with a stirrer rotated at proper revolutions per minute. In this procedure, a small amount of an acid, an alkali, alcohols, a powder of water-insoluble metal oxide fine particles, a water-soluble polymer material (e.g., gelatin), and/or an anticoagulant may be added to the reaction mixture, if needed.

If the barium halide is barium chloride and/or barium bromide, the total concentration of barium in the reaction mixture is preferably in the range of 0.6 to 2.5 mol/L, more preferably in the range of 0.7 to 1.5 mol/L, and most preferably in the range of 0.8 to 1.2 mol/L. If the barium halide is barium iodide, the total concentration of barium in the reaction mixture is preferably in the range of 2.5 to 5.0 mol/L, more preferably in the range of 2.7 to 4.8 mol/L, and most preferably in the range of 2.8 to 4.5 mol/L.

The temperature of the reaction mixture is generally in the range of 20°C to 95°C, preferably in the range of 40°C to 90°C, more preferably in the range of 60°C to 82°C. The temperature is preferably kept until the reaction is complete.

### (2) Production of nuclei

In the third and fourth process, the nuclei can be supplied by addition of an aqueous fluoride solution or by addition of seed particles.

### 2a) Addition of aqueous fluoride solution

Examples of the fluorides include ammonium fluoride, hydrogen fluoride, lithium fluoride, sodium fluoride and potassium fluoride. The nature and concentration of the fluoride solution are optionally determined in consideration of the property of the target phosphor precursor.

The fluoride solution is preferably added under control of the addition rate. If two or more fluoride solutions are added according to the double-jet method or the triple-jet method, the addition rates and the order of addition can be optionally controlled. However, the solutions are preferably added simultaneously. The compounds in the reaction mixture react to form phosphor precursor particles over the seed particles, which then precipitate in the reaction mixture.

### 2b) Dispersion of seed particles

The seed particles of barium fluorohalide (BaFX'; X¹ is Cl, Br, and/or I) employed in the third and fourth processes preferably is not in the form of almost cubic, tetradecahedral, isotropically polyhedral or spherical particles. The seed particle preferably are in the form of spherical particles.

The seed particles have a size (median diameter: Dm) of preferably 0.5 to 8.0 *µ*m, more preferably 1.0 to 6.0 *µ*m, most preferably 2.0 to 4.0 *µ*m. The term of "median diameter" means a diameter at which the cumulative distribution reaches 50% of the total particles in the distribution curve (diameter versus frequency).

The seed particles of barium fluorohalide are preferably monodispersed. The seed particles generally has a coefficient of variation (which indicates the degree of monodispersion of 40% or less, preferably 30% or less, more preferably 20% or less.

The seed particles of barium fluorohalide preferably contains a halogen (X) other than fluorine in an amount of 70 mol% or higher, more preferably 90 mol% or higher, most preferably 99 mol% or higher.

The seed particles of barium fluorohalide can be favorably prepared by using a fluoro complex as the fluorine source, as is described JP-A-2004-124026. In more detail, a barium halide and a fluoro complex are dissolved in an aqueous medium to give an aqueous solution. If required, a trigger compound or a compound serving as the trigger can be added to the aqueous solution. From the aqueous solution, seed particles of barium fluorohalide precipitate in the solution, and then the seed particles are separated from the solution. According to this process, the fluoro complex uniformly decomposes in the solution to release fluoride ion (i.e., fluorine ion), and the reaction proceeds smoothly in the presence of the released fluoride ion. Therefore, the monodispersed seed particles are produced.

The fluoro complex preferably is a fluoro-boron complex. Examples of the fluoro-boron complexes include difluoro borates such as M[BF₂(OH)₂] (M is an alkali metal such as Na or K or NH₄), trifluoroboric acids H[BF₃(OH)], trifluoro borates such as M[BF₃(OH)] and M[BF₃(OCH₃)], tetrafluoroboric acid H[BF₄], tetrafluoro borates such as M [BF₄]. Preferred are H [BF₄] , Na[BF₄] K [BF⁴] and NH₄[BF₄} .

The trigger compound causes decomposition of the fluoro complex in the solution. Examples of the trigger compounds include acids such as nitric acid, sulfuric acid, phosphoric acid, acetic acid, hydrofluoric acid, hydrochloric acid, hydrobromic acid and hydroiodic acid, and alkaline solutions such as aqueous ammonia, aqueous lithium hydroxide, aqueous sodium hydroxide, and aqueous potassium hydroxide. An example of the compound serving as the trigger is urea. Urea is hydrolyzed in a solution to release ammonia (trigger). The hydrolysis of urea can be caused by adjusting the temperature or pH of the solution.

Otherwise, it is possible to release a free fluoride ion from the fluoro complex without adding the trigger compound but controlling the temperature of the fluoro complex solution, for instance, maintaining the temperature of the solution (reaction mixture) at 40°C or higher, preferably 60°C or higher, more preferably 80°C or higher.

It should be noted that seed particles of barium fluorohalide prepared by other methods also can be employed in the second process of the invention.

The seed particles are preferably prepared in a large amount showing the same characteristics.

The seed particles of barium fluorohalide are added to the aforementioned reaction mixture to produce a dispersion. The seed particles can be added to the reaction mixture in the form of powder or aqueous slurry. The powder or aqueous slurry can be subjected to a dispersing procedure in advance of adding to the reaction mixture. The dispersing procedure can be a known procedure such as mill dispersion or stirring dispersion.

The seed particles are preferably added to the reaction mixture under a specific dispersing procedure, or the reaction mixture to which the seed particles have been added are preferably subjected to specific a dispersing procedure. The specific dispersing procedure is used to mean a dispersing procedure other than simple stirring. Examples of the specific dispersing procedures include procedures using pressure under complete sealing, venturi, ejector (orifice), slit shearing stress, grinding shear stress, impact shearing stress, or nanomizer, and procedures using ultrasonic wave. The ultrasonic dispersing procedure and the procedure utilizing nanomizer are preferred.

### (3) Growth of seed particles

To the reaction mixture obtained above maintained to have the same temperature was added barium fluoride (BaF₂). The barium fluoride is added to the reaction mixture in the form of powder or aqueous slurry. The powder and slurry can be subjected to a dispersing procedure in advance of adding to the reaction mixture. The dispersing procedure can be mill dispersing or stirring. The addition of barium fluoride can be done intermittently or portionwise.

The reaction mixture to which barium fluoride is added is then kept to the same temperature for a certain period of time for aging, so as to cause growth of the nuclei to produce precursor particles of rare earth activated barium fluorohalide in the reaction mixture. In other words, while the added barium fluoride dissolves in the reaction mixture, the desired phosphor precursor particles grow over the in *situ* produced phosphor nuclei or the added seed particles.

The growth of the seed particles of barium fluorohalide to the precursor particles in the step is preferably 1.5 to 10 times, more preferably 1.8 to 5.0 times, most preferably 2.0 to 3.5 times, as much as size of the seed particles.

In the third and fourth processes of the invention, the nuclei-forming procedure and the growing procedure do not proceed in the same step. In the growing procedure, the use of barium fluoride in the form of powder or slurry favorably effects to keep the supersaturation of the reaction mixture at a lower level, as compared the conventional procedure employing an aqueous fluoride solution, and hence the nuclei grows under the condition that no new nuclei is produced in the reaction mixture. Accordingly, monodispersed phosphor precursor particles can be obtained. Particularly, the use of the seed particles is advantageous in giving excellently monodispersed phosphor precursor particles.

### [Separation of precursor particles from reaction mixture]

The particles of phosphor precursor are separated from the reaction mixture by means of, for example, suction filtration, pressure filtration, or centrifugation. The separated particles are then washed well with a lower alcohol such as methanol, ethanol or propanol to remove impurities such as salt, and then dried at a temperature of 50°C to 180°C under reduced or atmospheric pressure to evaporate water and the alcohol.

Thus, the precursor particles of rare earth activated barium fluorohalide phosphor of the formula (I) are obtained. In the formula (I), X preferably is Br, and Ln preferably is Ce or Eu, because the phosphor obtained from such precursor shows preferred emission properties (with regard to spontaneous emission as well as stimulated emission).

The phosphor precursor prepared by the second process can be kept from forming tabular particles and can be obtained in the form of almost cubic, tetradecahedral, isotropically polyhedral or spherical particles. The precursor preferably is in the form of spherical particles.

The precursor particles prepared by the second have a size (median diameter: Dm) of preferably 1.0 to 20 *µ*m, more preferably 4.0 to 15 *µ*m, most preferably 6.0 to 12 *µ*m. If the particle size is less than 1.0 *µ*m, the particles are liable to aggregate. In contrast, if the particle size is larger than 20 *µ*m, the precursor particles are converted into such large phosphor particles that a radiation image storage panel comprising those phosphor particles gives a reproduced radiation image of poor quality. The term of "median diameter" means a diameter at which the cumulative distribution reaches 50% of the total particles in the distribution curve (diameter versus frequency). In other words, it means a diameter positioned at the median of particle size distribution. The median diameter Dm can be preferably determined according to known particle-measurement methods such as the electrical detecting method (e.g., by means of a colter counter) and the laser scattering method.

The precursor particles prepared by the third and fourth processes generally show a coefficient of variation in the range of 30% or less, and hence are highly monodispersed. The coefficient of variation is preferably 20% or less, more preferably 15% or less. The term "coefficient of variation" means a percentage of deviation based on the mean diameter, and accordingly it indicates the degree of monodispersion. If the precursor particles show a large coefficient of variation (and hence are poorly monodispersed), a radiation image storage panel comprising the resultant phosphor gives a reproduced radiation image of inferior quality.

### [Preparation of Rare Earth Activated Barium Fluorohalide Phosphor]

From the precursor obtained in the processes of the invention, the rare earth activated barium fluorohalide phosphor is prepared. The process for preparing the phosphor is described below.

### [Mixing of materials]

The phosphor precursor particles of the invention may be alone fired, but if needed other phosphor materials may be mixed.

Examples of the phosphor materials other than the precursor include barium halides (e.g., BaF₂, BaCl₂, BaBr₂, BaFCl, BaFBr), alkaline earth metal halides (e.g., MgF₂, MgCl₂, MgBr₂, CaF₂, CaCl₂, CaBr₂, SrF₂, SrCl₂, SrBr₂), alkali metal halides (e.g., LiF, LiCl, LiBr, NaF, NaCl, NaBr, KF, KCl, KBr, RbF, RbCl, RbBr, CsF, CsCl, CsBr), metal oxides (e.g., Al₂O₃, SiO₂, ZrO₂), compounds (such as halides, oxide, nitrate and sulfate) of rare earth elements (Ce, Pr, Nd, Pm, Sm, Eu, Gd, Tb, Dy, Ho, Er, Tm, Yb), and ammonium halides (NH₄X' in which X' is F, Cl or Br).

Further, in order to improve emission properties (such as stimulated emission intensity and erasability of stored radiation energy) of the resultant phosphor, various other components may be added. They are, for example, elements other than those contained in the precursor. Examples of them include non-metal elements (e.g., B, O, S, As), amphoteric elements (e.g., Al, Ge, Sn), metal elements (e.g., V, Be, Mn, Fe, Ni, Co, Cu, Ag), tetrafluoro borate, and hexafluoro compounds.

The above-described materials can be mixed with the precursor according to various known mixing methods.

### [Firing]

In the present specification, the term "firing" means a heat treatment by which the precursor or the mixture of precursor and other materials are given desired emission properties so as to be converted into the aimed phosphor. Prior to the step of firing, the below-described preliminary firing may be carried out.

### (Preliminary firing)

In the step of preliminary firing, the precursor or the mixture thereof is treated at a temperature lower than the temperature in the step of (main) firing thereafter. The main firing promotes, at a higher temperature, not only synthesis of the phosphor crystal but also diffusion of the activator into the crystal, and accordingly it plays both roles of synthesizing the crystal and giving the emission properties (such as properties of instant emission, stimulated emission and afterglow). In contrast, the preliminary firing is carried out at a lower temperature predominantly for the purpose of synthesizing the phosphor crystal. The preliminary firing, therefore, can be conducted so that the roles of the main and preliminary firing steps may be clearly separated. Accordingly, the preliminary firing makes it easy to control freely the emission properties of the resultant phosphor.

The preliminary firing is conducted at a temperature of 200°C to 900°C, which is lower than the temperature in the main firing. The difference between the temperature in the preliminary firing and that in the main firing depends on various conditions (such as time for the preliminary firing and composition of the precursor or of the mixture thereof), but is generally 20°C or more, preferably 50°C or more. The period for the preliminary firing is generally in the range of 0.1 to 10 hours, preferably in the range of 0.5 to 5 hours. It is not necessary to control strictly the atmosphere in the preliminary firing, and hence any furnace can be used so long as the firing can be carried out at the above-mentioned temperature. Examples of the furnace include muffle furnace, rotary kiln, and atmospheric furnace. In consideration of productivity, a continuous furnace (tunnel kiln), in which the firing can be continuously conducted, is particularly preferred.

It is not always necessary to granulate the product of the preliminary firing, but the product may be slightly treated with a mortar in consideration of particle size of the resultant phosphor or evenness of the fired product.

### (Main firing)

First, the product of the preliminary firing or, if the preliminary firing is not conducted, the precursor or the mixture thereof, is placed in a heat-resistant container such as a quartz boat or a quartz crucible. The heat-resistant container charged with the material is then placed in a heated electric furnace. As the firing furnace, a tube furnace is preferred. However, various other furnaces can be used as long as the firing atmosphere can be desirably controlled.

The firing temperature is generally in the range of 500°C to 1,000°C, preferably in the range of 700°C to 900°C. The firing may be conducted at a constant temperature all through the step, or the temperature may be gradually lowered (cooled) in the late stage of firing. The firing is conducted generally for 0.5 to 24 hours, preferably for 1 to 10 hours. The firing is conducted under neutral or weak acidic atmosphere. The neutral atmosphere can be obtained with, for example, inert gases such as He, Ne, Ar and N₂. The term "weak acidic atmosphere" means an atmosphere of an inert gas containing a small amount of oxygen gas. In some cases, a weak reductive atmosphere (for example, an atmosphere of an inert gas containing a small amount of hydrogen or an atmosphere of carbon dioxide containing carbon monoxide) may be adopted.

### [Cooling]

The product obtained by the firing is kept shielded from air, and cooled while the neutral or weak acidic atmosphere in the firing is being exhausted or replaced with a predetermined atmosphere. This cooling step is normally conducted immediately after the firing step (in which the temperature may be gradually lowered in the late stage), but the product may be step-by-step cooled with the cooling rate and/or the cooling atmosphere changed.

The heat-resistant container is thus cooled to preferably 500°C or below, more preferably 300°C or below. After the cooling step is completed, the container charged with the product is taken out of the furnace. The fired product may be further cooled, if needed.

### [Granulating and sieving]

The cooled product sometimes contains slightly sintered or aggregated particles, and hence is preferably subjected to after-treatments such as granulating and sieving, by which sintered particles and large particles grown too much can be removed.

In the granulating step, the fired product is stirred in a Ba²⁺ or alkali metal ion-containing aqueous solution or in an organic solution such as a lower alcohol or a ketone. The granulated product particles are then separated from the suspension, and sieved. The suspension may be directly sieved. Examples of the sieving method include wet sieving method, dry sieving method, water-jet classification method with a wet cyclone, gas-stream classification method with a dry cyclone, and precipitation method. The wet sieving method is particularly preferred because the suspension can be continuously treated immediately after granulating. The sieved particles are finally separated from the suspension and dried in a normal manner.

Thus, crystalline particles of rare earth activated barium fluorohalide phosphor represented by the formula (I) are prepared. The obtained phosphor of the invention can be used for various phosphor-containing devices, and it is particularly preferred to use the phosphor of the invention as stimulable phosphor contained in a radiation image storage panel.

In the following description, the radiation image storage panel of the invention is explained in detail.

The radiation image storage panel of the invention comprises an energy-storing phosphor layer containing the rare earth activated barium fluorohalide phosphor represented by the formula (I). The phosphor layer normally comprises a binder and the energy-storing phosphor particles dispersed therein, but may further contain other energy-storing phosphor particles and/or additives such as a colorant.

In the following description, the process for preparation of the radiation image storage panel according to the invention is explained in detail, by way of example, in the case where the phosphor layer comprises a binder and the energy-storing phosphor particles dispersed therein.

The support is normally a soft resin sheet or film having a thickness of 50 *µ*m to 1 mm. Examples of the resin material employable for the support include polyethylene terephthalate, polyethylene naphthalate, aramide resin and polyimide resin. The support may be transparent, may contain light-reflecting material (e.g., particles of alumina, titanium dioxide and barium sulfate) or voids for reflecting the stimulating rays or the emission, or may contain light-absorbing material (e.g., carbon black) for absorbing the stimulating rays or the emission. The support may be a sheet of metal, ceramics or glass, if desired.

For improving the sensitivity or the image quality (e.g., sharpness and graininess), a light-reflecting layer containing a light-reflecting material such as titanium dioxide or a light-absorbing layer containing a light-absorbing material such as carbon black can be formed on the support surface on the side where the phosphor layer is provided. On the opposite side of the support surface, a light-shielding layer containing carbon black can be provided for improving the sensitivity. In order to improve the image quality, fine concaves and convexes may be formed on the phosphor layer-side surface of the support (or on the phosphor layer-side surface of an auxiliary layer such as an undercoating (adhesive) layer, a light-reflecting layer or a light-absorbing layer, if provided).

On the support (or on the auxiliary layer), the phosphor layer containing the energy-storing phosphor is provided. For forming the phosphor layer, the energy-storing phosphor particles and a binder are dispersed or dissolved in an appropriate organic solvent to prepare a coating solution. The ratio between the binder and the phosphor in the solution depends on the properties of the aimed radiation image storage panel, and is normally in the range of 1:1 to 1:100 (by weight), preferably 1:8 to 1:40 (by weight).

Examples of the binder include natural polymers such as proteins (e.g., gelatin), polysaccharides (e.g., dextran) and gum arabic; and synthetic polymers such as polyvinyl butyral, polyvinyl acetate, nitrocellulose, ethyl cellulose, vinylidene chloride-vinyl chloride copolymer, polyalkyl (meth)acrylate, vinyl chloride-vinyl acetate copolymer, polyurethane, cellulose acetate butyrate, polyvinyl alcohol, linear polyester, and thermoplastic elastomers. These may be crosslinked with a crosslinking agent.

Examples of the solvent employable in preparation of the coating solution include lower aliphatic alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower aliphatic alcohols with lower aliphatic acids such as methyl acetate, ethyl acetate and butyl acetate; ethers such as dioxane, ethylene glycol monoethyl ether, ethylene glycol monomethyl ether and tetrahydrofuran; and mixtures thereof.

The coating solution can contain various additives such as a dispersing aid to assist the phosphor particles in dispersing, a plasticizer for enhancing the bonding between the binder and the phosphor particles, an anti-yellowing agent for preventing the layer from undesirable coloring, a hardening agent, and a crosslinking agent.

The prepared coating solution is then evenly spread to coat a surface of the support by a normal means such as a doctor blade, a roll coater or a knife coater, and dried to form the energy-storing phosphor layer. The thickness of the phosphor layer depends on various conditions such as characteristics of the aimed storage panel and the mixing ratio between the binder and the phosphor, but is normally in the range of 20 *µ*m to 1 mm, preferably in the range of 50 to 500 *µ*m.

It is not necessary to form the energy-storing phosphor layer directly on the support. For example, the phosphor layer beforehand formed on another substrate (temporary support) can be peeled off and then fixed on the support with an adhesive or by pressing with heating. The energy-storing phosphor layer does not always consist of a single layer, and can consist of two or more sub-layers. In that case, it is possible to change desirably the phosphor, sizes of the phosphor particles and the mixing ratio of binder and phosphor in each sub-layer. The emission properties of the energy-storing phosphor layer can be thus controlled according to the use.

On the energy-storing phosphor layer, a protective layer is preferably provided to ensure good handling of the storage panel in transportation and to avoid deterioration. The protective layer is preferably transparent so as not to prevent the stimulating rays from coming in or not to prevent the emission from coming out. Further, for protecting the storage panel from chemical deterioration and physical damage, the protective layer is preferably chemically stable, physically strong, and of high moisture proof.

The protective layer can be provided by coating the phosphor layer with a solution in which a transparent organic polymer (e.g., cellulose derivatives, polymethyl methacrylate, fluororesins soluble in organic solvents) is dissolved in an appropriate solvent, by laminating a beforehand prepared sheet as the protective layer (e.g., a film of glass or organic polymer such as polyethylene terephthalate) on the phosphor layer with an adhesive, or otherwise by depositing vapor of inorganic compounds on the phosphor layer.

For enhancing the resistance to stain, a fluororesin layer may be further provided on the protective layer.

Thus, a radiation image storage panel of the invention can be produced. The storage panel of the invention can be in known various structures. For example, in order to improve the sharpness of the resultant image, at least one of the layers or sub-layers may be colored with a colorant which does not absorb the stimulated emission but the stimulating ray. Further, another phosphor layer comprising a phosphor which absorbs radiation and instantly emits ultraviolet or visible light (namely, a layer of radiation-absorbing phosphor) can be provided. Examples of that phosphor include phosphors of LnTaO₄: (Nb, Gd) type, Ln₂SiO₅: Ce type and LnOx:Tm type (Ln is a rare earth element) ; CsX (X is a halogen); Gd₂O₂S : Tb; Gd₂O₂S: Pr, Ce ; ZnWO₄; LuAlO₃: Ce ; Gd₃Ga₅O₁₂: Cr, Ce ; and Hf O₂ .

The present invention is further explained in detail in the following examples, but they by no means restrict the invention.

### [Example 1] Phosphor precursor particles

### (1) Particle formation

In a reaction vessel equipped with a stirrer, 570 mL of a reaction mixture (aqueous solution containing 0.268 mol of BaBr₂, 0.359 mol of BaI₂, 0.002 mol of EuBr₃ 0.004 mol of CaBr₂·2H₂O and 0.0068 mol of KBr) was placed and stirred at 40°C. While the temperature of the reaction mixture was kept at 40°C, 80.0 mL of 5.0 mol/L aqueous NH₄F solution was added to the mixture at a constant addition rate, to precipitate particles of the phosphor precursor.

### (2) Separation of particles from reaction mixture

The phosphor precursor particles were collected by filtration, washed with 500 mL of ethanol, and dried under reduced pressure at 120°C for 4 hours. Thus, precursor of europium activated barium fluorobromide (Ba_{0.99}Ca_{0.01}FBr:0.0002K, 0.005Eu) phosphor was obtained in the form of particles.

The prepared precursor particles were examined according to the powder X-ray diffraction analysis under the following conditions:
tube: Cu, tube voltage: 40 kV, tube current: 30 mA,
sampling width: 0.002°, scanning rate: 0.25°/minute, divergence slit: 1°, scatter slit: 1°,
light-receiving slit: 0.15 mm.

It was confirmed that the prepared precursor did not contain BaFI composition and consisted of a single phase of the above-mentioned composition. The relative iodine content based on barium content was less than 1.0%.

### [Example 2] Phosphor precursor particles

The procedure of Example 1 were repeated except that an aqueous solution containing 0.291 mol of BaBr₂, 0.393 mol of BaI₂, 0.002 mol of EuBr₃, 0.004 mol of CaBr₂. 2H₂O and 0.0068 mol of KBr was used as the reaction mixture, to prepare precursor particles of europium activated barium fluorobromide phosphor.

### [Example 3] Phosphor precursor particles

The procedures of Example 1 were repeated except that an aqueous solution containing 0.342 mol of BaBr₂, 0.456 mol of BaI₂, 0.002 mol of EuBr₃, 0.004 mol of CaBr₂·2H₂O and 0.0068 mol of KBr was used as the reaction mixture, to prepare precursor particles of europium activated barium fluorobromide phosphor.

### [Example 4] Phosphor precursor particles

The procedures of Example 1 were repeated except that an aqueous solution containing 0.456 mol of BaBr₂, 0.342 mol of BaI₂, 0.002 mol of EuBr₃, 0.004 mol of CaBr₂·2H₂O and 0.0068 mol of KBr was used as the reaction mixture, to prepare precursor particles of europium activated barium fluoride bromide phosphor.

### [Example 5] Phosphor precursor particles

The procedure of Example 1 was repeated except that an aqueous solution containing 0.456 mol of BaBr₂, 0.570 mol of BaI₂, 0.002 mol of EuBr₃, 0.004 mol of CaBr₂·2H₂O and 0.0068 mol of KBr was used as the reaction mixture, to prepare precursor particles of europium activated barium fluoride bromide phosphor.

### [Example 6] Phosphor precursor particles

The procedures of Example 1 were repeated except that an aqueous solution containing 0.342 mol of BaCl₂, 0.456 mol of BaI₂, 0.002 mol of EuCl₃, 0.004 mol of CaCl₂·2H₂O and 0.0068 mol of KCl was used as the reaction mixture, to prepare precursor particles of europium activated barium fluorochloride (Ba_{0.99}Ca_{0.01}FCl:0.0002K, 0.005Eu) phosphor.

The precursor particles prepared in Examples 2 ti 6 were examined according to the powder X-ray diffraction analysis. It was confirmed that the precursor did not contain BaFI composition and consisted of a single phase of the above composition. The relative iodine content based on barium content was less than 1.0%.

### [Comparison Example 1] Phosphor precursor particles

The procedures of Example 1 were repeated except that an aqueous solution containing 0.798 mol of BaBr₂, 0.002 mol of EuBr₃, 0.004 mol of CaBr₂·2H₂O and 0.0068 mol of KBr was used as the reaction mixture, to prepare conventional precursor particles of europium activated barium fluoride bromide phosphor.

### [Comparison Example 2] Phosphor precursor particles

According to Experiment No. C2 of Example 1, in JP-A-10-147778, phosphor precursor particles for comparison were prepared.

### [Comparison Example 3] Phosphor precursor particles

According to Example 1 in JP-A-2004-124025, phosphor precursor particles for comparison were prepared.

### [Examination of Phosphor Precursor Particles]

With respect to the particles of phosphor precursor prepared in each example, the iodine content (relative I content based on Ba content in terms of mol%) was measured according to the X-ray diffraction analysis. The particle size (Dm, *µ*m) was also measured by means of a colter counter, and further the mean diameter was obtained by means of a sub-sieve sizer, so that the level of aggregation (Dm/mean diameter) was determined. In addition, the coefficient of variation (percentage of deviation based on the mean diameter) was estimated. The results are set forth in Table 1.

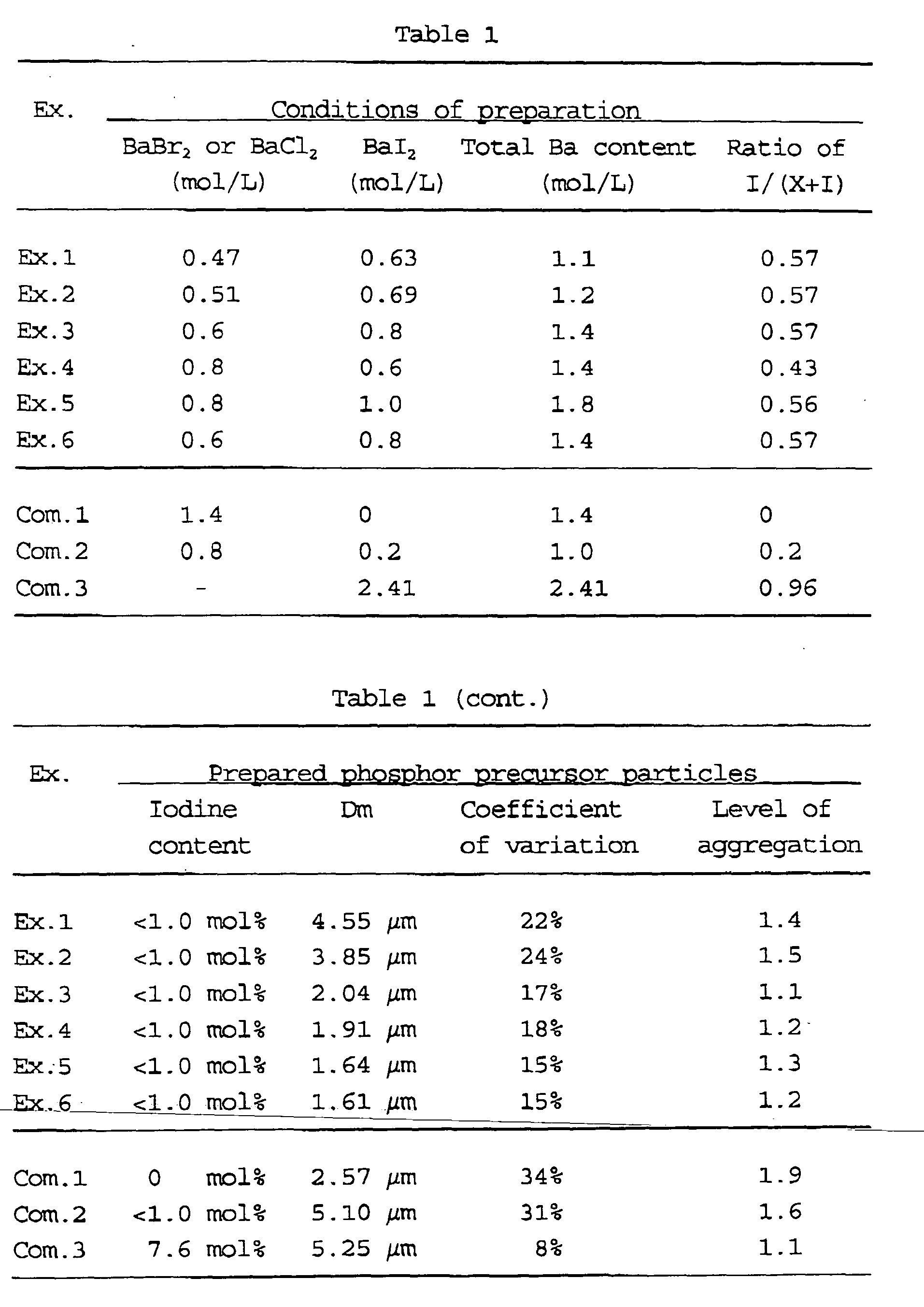

### [Example 7] Phosphor precursor particles

### (1) Preparation of seed particles

In a reaction vessel equipped with a stirrer was placed 218.5 mL of an aqueous solution containing BaI₂ (0.667 mol), EuI₃ (0.0005 mol), Ca(CH₃COO)₂ (0.001 mol), KI (0.010 mol) and urea (1.2 mol). The aqueous solution was then kept at 30°C. To the solution was added NH₄BF₄ (2.621 g), and the resulting mixture was heated to 80°C. The mixture was heated at 80°C for 120 minutes to precipitate seed particles. The seed particles were collected by filtration and washed with isopropyl alcohol (500 mL). The washed particles were dried at 120°C for 4 hours, to give seed particles of barium fluoroiodide (BaFI). The seed particles was monodispersed particles having a particle size (Dm) of 2.7 *µ*m and a coefficient of variation of 14%.

### (2) Particle formation

In a reaction vessel equipped with a stirrer was placed 282.3 mL of an aqueous solution containing BaI₂ (1.254 mol), EuI₃ (0.00206 mol), CaI₂-2H₂O (0.0041 mol), and KI (0.0070 mol). The aqueous solution was heated to 80°C under stirring. The seed particles prepared in (1) above (18.3 g) in the form of powder were added to the above-mentioned heated solution, while applying ultrasonic wave to the solution. The application of ultrasonic wave was continued for 5 minutes even after the addition of the seed particles was complete. To the aqueous solution containing the dispersed seed particles was added aqueous NH₄F solution (10.0 mol/L, 34.65 mL) at a constant flow rate. The resulting aqueous mixture was left to stand for 30 minutes to perform aging, whereby producing the phosphor precursor particles. In the described procedures, the solution was kept at 80°C.

### (3) Separation of particles from reaction mixture

The phosphor precursor particles were collected by filtration, washed with 500 mL of isopropyl alcohol, and dried under reduced pressure at 120°C for 4 hours. Thus, precursor of europium activated barium fluoroiodide (Ba_{0.09}Ca_{0.01}FI:0.0002K,0.005Eu) phosphor was obtained in the form of particles.

The prepared precursor particles were examined according to the powder X-ray diffraction analysis under the following conditions:
tube: Cu, tube voltage: 40 kV, tube current: 30 mA,
sampling width: 0.002°, scanning rate: 0.25°/minute, divergence slit: 1°, scatter slit: 1°,
light-receiving slit: 0.15 mm.

It was confirmed that the prepared precursor particles were monodispersed particles consisting of a single phase of the above-mentioned composition.

### [Example 8] Phosphor precursor particles

### (1) Preparation of seed particles

In a reaction vessel equipped with a stirrer was placed 218.5 mL of an aqueous solution containing BaBr₂ (0.222 mol), EuBr₃ (0.0005 mol), Ca(CH₃COO)₂ (0.001 mol), KI (0.010 mol) and urea (1.0 mol). The aqueous solution was then kept at 30°C. To the solution was added NH₄BF₄ (2.621 g), and the resulting mixture was heated to 80°C. The mixture was heated at 80°C for 120 minutes to precipitate seed particles. The seed particles were collected by filtration and washed with isopropyl alcohol (500 mL). The washed particles were dried at 120°C for 4 hours, to give seed particles of barium fluoroiodide (BaFBr). The seed particles was monodispersed particles having a particle size (Dm) of 2.7 *µ*m and a coefficient of variation of 12%.

### (2) Particle formation

In a reaction vessel equipped with a stirrer was placed 282.3 mL of an aqueous solution containing BaBr₂ (0.260 mol), EuBr₃ (0.00065 mol), CaBr₂·2H₂O (0.0013 mol), and KBr (0.0022 mol). The aqueous solution was heated to 60°C under stirring. The seed particles prepared in (1) above (2.28 g) in the form of powder were added to the above-mentioned heated solution, while applying ultrasonic wave to the solution. The application of ultrasonic wave was continued for 5 minutes even after the addition of the seed particles was complete. To the aqueous solution containing the dispersed seed particles was added aqueous NH₄F solution (5.0 mol/L, 25.04 mL) at a constant flow rate. The resulting aqueous mixture was left to stand for 30 minutes to perform aging, whereby producing the phosphor precursor particles. In the described procedures, the solution was kept at 60°C.

### (3) Separation of particles from reaction mixture

The phosphor precursor particles were collected by filtration, washed with 500 mL of ethyl alcohol, and dried under reduced pressure at 120°C for 4 hours. Thus, precursor of europium activated barium fluorobromide (Ba_{0.99}Ca_{0.01}FBr:0.0002K, 0.005Eu) phosphor was obtained in the form of particles.

The prepared precursor particles were examined according to the powder X-ray diffraction analysis under the conditions described in Example 7. It was confirmed that the prepared precursor particles were monodispersed particles consisting of a single phase of the above-mentioned composition.

### [Comparison Example 4]

The procedures of Example 7 were repeated except that no seed particles were used and that aqueous NH₄F solution (12.0 mol/L, 29.21 mL) was added to the aqueous solution (kept to 80°C) at a constant flow rate, and then the aging was carried out for 480 minutes, to prepare europium activated barium flouroiodide for comparison.

### [Comparison Example 5]

The procedures of Example 8 were repeated except that no seed particles were used and that aqueous NH₄F solution (5.0 mol/L, 25.97 mL) was added to the aqueous solution (kept to 60°C) at a constant flow rate, and then the aging was carried out for 120 minutes, to prepare europium activated barium flouroiodide for comparison.

### [Examination of Phosphor Precursor Particles]

With respect to the particles of phosphor precursor prepared in each example, the particle size (Dm, *µ*m) was also measured by means of a colter counter, and further the mean diameter was obtained from a scanning electron microscopic photograph. In addition, the coefficient of variation (percentage of deviation based on the mean diameter) was estimated. The results are set forth in Table 2. In Table 2 was further described a period of time (process time) from the time when the addition of the seed particles or aqueous NH₄F to the aqueous solution was started to the time when the separation of the prepared precursor particles was started.

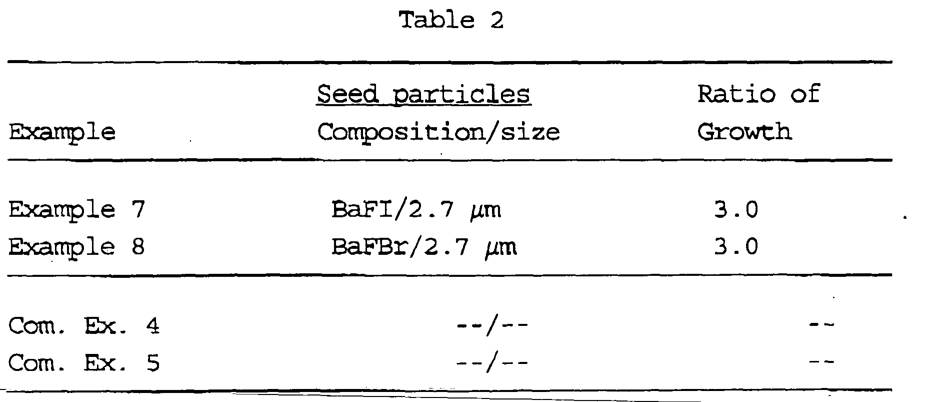

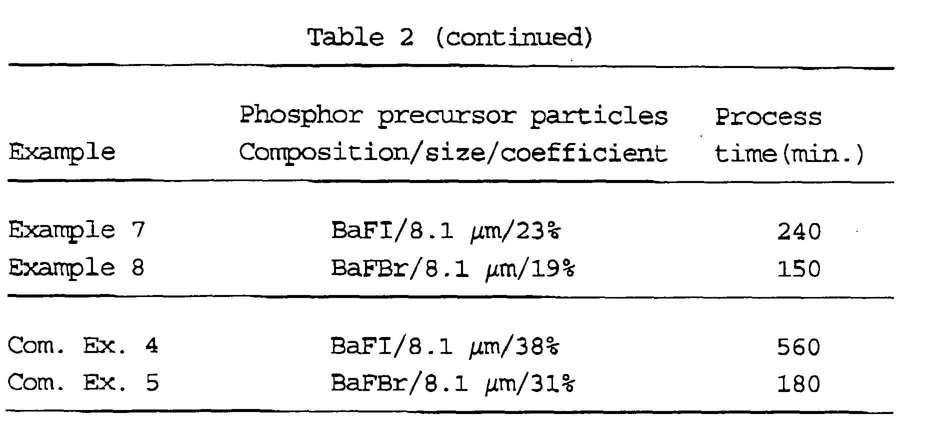

### [Example 9] Phosphor precursor particles

### (1) Particle formation

In a reaction vessel equipped with a stirrer, 282.3 mL of a reaction mixture (aqueous solution containing 0.254 mol of BaI₂, 0.00206 mol of EuI₂, 0.0041 mol of CaI₂·2H₂O and 0.0070 mol of KBr) was placed and stirred at 80°C. While the temperature of the reaction mixture was kept at 80°C, 32.27 mL of 2.0 mol/L aqueous NH₄F solution was added to the mixture at a constant addition rate. Subsequently, 30.38 g of powdery BaF₂ was added, and aging was carried out, to precipitate particles of the phosphor precursor. The reaction mixture was continuously kept to 80°C in the procedures.

### (2) Separation of particles from reaction mixture

The phosphor precursor particles were collected by filtration, washed with 500 mL of isopropyl alcohol, and dried under reduced pressure at 120°C for 4 hours. Thus, precursor of europium activated barium fluoroiodide (Ba_{0.99}Ca_{0.01}FI:0.0002K,0.005Eu) phosphor was obtained in the form of particles.

The prepared precursor particles were examined according to the powder X-ray diffraction analysis under the following conditions:
tube: Cu, tube voltage: 40 kV, tube current: 30 mA,
sampling width: 0.002°, scanning rate: 0.25°/minute, divergence slit: 1°, scatter slit: 1°,
light-receiving slit: 0.15 mm.

It was confirmed that the prepared precursor particles were monodispersed particles consisting of a single phase of the above-mentioned composition.

### [Example 10] Phosphor precursor particles

### (1) Particle formation

In a reaction vessel equipped with a stirrer, 282.3 mL of a reaction mixture (aqueous solution containing 0.260 mol of BaBr₂, 0.00065 mol of EuBr₂, 0.0013 mol of CaBr₂·2H₂O and 0.0022 mol of KBr) was placed and stirred at 60°C. While the temperature of the reaction mixture was kept at 60°C, 6.02 mL of 2.0 mol/L aqueous NH₄F solution was added to the mixture at a constant addition rate. Subsequently, 10.97 g of powdery BaF₂ was added, and aging was carried out, to precipitate particles of the phosphor precursor. The reaction mixture was continuously kept to 60°C in the procedures.

### (2) Separation of particles from reaction mixture

The phosphor precursor particles were collected by filtration, washed with 500 mL of ethyl alcohol, and dried under reduced pressure at 120°C for 4 hours. Thus, precursor of europium activated barium fluorobromide (Ba_{0.99}Ca_{0.01}FBr:0.0002K,0.005Eu) phosphor was obtained in the form of particles.

The prepared precursor particles were examined according to the powder X-ray diffraction analysis. It was confirmed that the prepared precursor particles were monodispersed particles consisting of a single phase of the above-mentioned composition.

### [Example 11] Phosphor precursor particles

### (1) Preparation of seed particles

In a reaction vessel equipped with a stirrer was placed 218.5 mL of an aqueous solution containing BaI₂ (0.667 mol), EuI₃ (0.0005 mol), Ca(CH₃COO)₂ (0.001 mol), KI (0.010 mol) and urea (1.2 mol). The aqueous solution was then kept at 30°C. To the solution was added NH₄BF₄ (2.621 g), and the resulting mixture was heated to 80°C. The mixture was heated at 80°C for 120 minutes to precipitate seed particles. The seed particles were collected by filtration and washed with isopropyl alcohol (500 mL). The washed particles were dried at 120°C for 4 hours, to give seed particles of barium fluoroiodide (BaFI). The seed particles was monodispersed particles having a particle size (Dm) of 2.7 *µ*m and a coefficient of variation of 14%.

### (2) Particle formation

In a reaction vessel equipped with a stirrer was placed 282.3 mL of an aqueous solution of Example 9. The aqueous solution was heated to 80°C under stirring. The seed particles prepared in (1) above (18.3 g) in the form of powder were added to the above-mentioned heated solution, while applying ultrasonic wave to the solution. The application of ultrasonic wave was continued for 5 minutes even after the addition of the seed particles was complete. To the aqueous solution containing the dispersed seed particles was added powdery BaF₂ (30.38 g). The resulting aqueous mixture was left to stand for 90 minutes to perform aging, whereby producing the phosphor precursor particles. In the described procedures, the solution was kept at 80°C.

### (3) Separation of particles from reaction mixture

The procedures of Example 9 were repeated to give a precursor of europium activated barium fluoroiodide (Ba_{0.99}Ca_{0.01}FI: 0.0002K, 0.005Eu) phosphor was obtained in the form of particles.

The prepared precursor particles were examined according to the powder x-ray diffraction analysis. It was confirmed that the prepared precursor particles were monodispersed particles consisting of a single phase of the above-mentioned composition.

### [Example 12] Phosphor precursor particles

### (1) Preparation of seed particles

In a reaction vessel equipped with a stirrer was placed 218.5 mL of an aqueous solution containing BaBr₂ (0.222 mol), EuBr₃ (0. 0005 mol), Ca(CH₃COO)₂ (0.001 mol), KI (0.010 mol) and urea (1.0 mol). The aqueous solution was then kept at 30°C. To the solution was added NH₄BF₄ (2.621 g), and the resulting mixture was heated to 80°C. The mixture was heated at 80°C for 120 minutes to precipitate seed particles. The seed particles were collected by filtration and washed with isopropyl alcohol (500 mL). The washed particles were dried at 120°C for 4 hours, to give seed particles of barium fluoroiodide (BaFBr). The seed particles was monodispersed particles having a particle size (Dm) of 2.7 *µ*m and a coefficient of variation of 12%.

### (2) Particle formation

In a reaction vessel equipped with a stirrer was placed 282.3 mL of an aqueous solution of Example 10. The aqueous solution was heated to 60°C under stirring. The seed particles prepared in (1) above (18.3 g) in the form of powder were added to the above-mentioned heated solution, while applying ultrasonic wave to the solution. The application of ultrasonic wave was continued for 5 minutes even after the addition of the seed particles was complete. To the aqueous solution containing the dispersed seed particles was added powdery BaF₂ (10.97 g). The resulting aqueous mixture was left to stand for 60 minutes to perform aging, whereby producing the phosphor precursor particles. In the described procedures, the solution was kept at 60°C.

### (3) Separation of particles from reaction mixture

The procedures of Example 10 were repeated to give a precursor of europium activated barium fluorobromide (Ba_{0.99}Ca_{0.01}FBr:0.0002K, 0.005Eu) phosphor was obtained in the form of particles.

The prepared precursor particles were examined according to the powder X-ray diffraction analysis. It was confirmed that the prepared precursor particles were monodispersed particles consisting of a single phase of the above-mentioned composition.

### [Comparison Example 6]

The procedures of Example 9 were repeated except that BaF₂ was not added and that aqueous NH₄F solution (12.0 mol/L, 29.21 mL) was added to the aqueous solution (kept to 80°C) at a constant flow rate, and then the aging was carried out for 480 minutes, to prepare europium activated barium flouroiodide for comparison.

### [Comparison Example 7]

The procedures of Example 10 were repeated except that BaF₂ was not added and that aqueous NH₁F solution (5.0 mol/L, 25.97 mL) was added to the aqueous solution (kept to 60°C) at a constant flow rate, and then the aging was carried out for 120 minutes, to prepare europium activated barium flouroiodide for comparison.

### [Examination of Phosphor Precursor Particles]

With respect to the particles of phosphor precursor prepared in each example, the particle size (Dm, *µ*m) was also measured by means of a colter counter, and further the mean diameter was obtained from a scanning electron microscopic photograph. In addition, the coefficient of variation (percentage of deviation based on the mean diameter) was estimated. The results are set forth in Table 3. In Table 3 was further described a period of time (process time) from the time when the addition of the seed particles or aqueous NH₄F to the aqueous solution was started to the time when the separation of the prepared precursor particles was started.

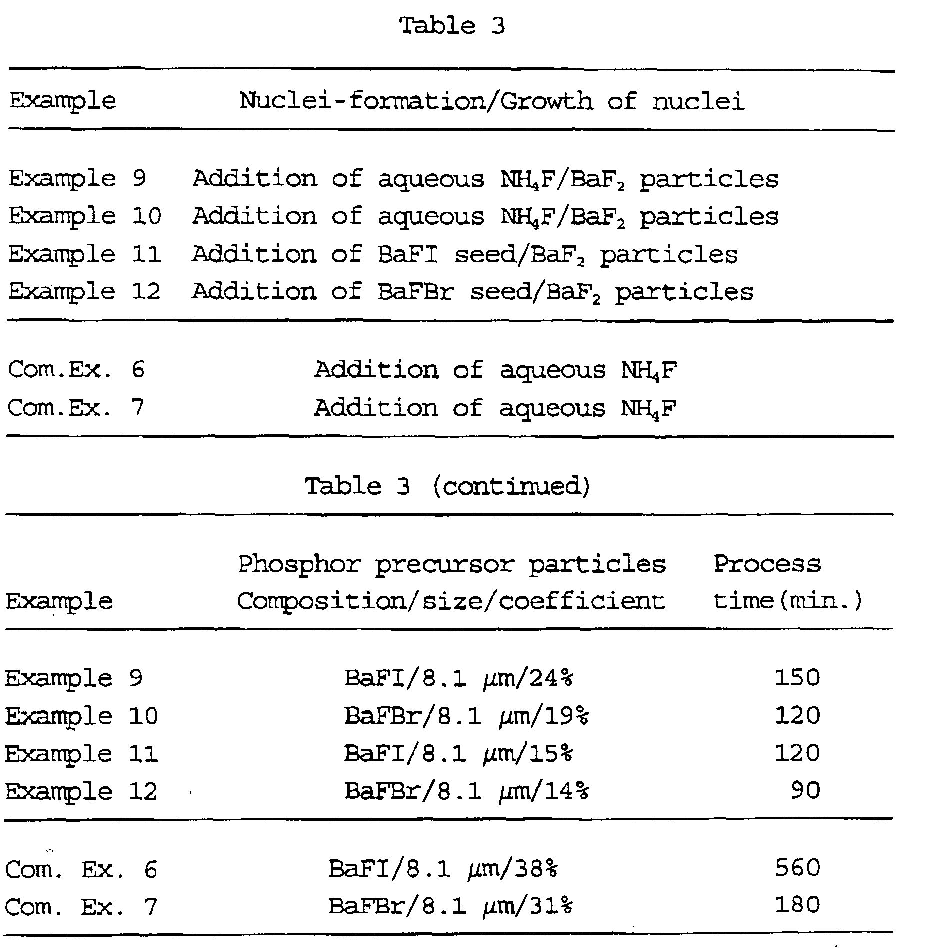

### [Example 13] Phosphor

To the phosphor precursor prepared in each of Examples, powdery alumina super-fine particles were added in an amount of 0.5 wt.%. After mixed well with a mixer, the resulting mixture was stuffed in a quartz boat and fired in a tube furnace. The firing was conducted at 800°C under nitrogen gas atmosphere for 2 hours. Thus, europium activated barium fluoride bromide phosphor and europium activated barium fluoride chloride phosphor of the invention were obtained in the form of particles.

Each prepared phosphor was then examined according to the powder X-ray diffraction analysis, and found to have almost the same iodine content and almost the same composition as the corresponding precursor. Further, each prepared phosphor was exposed to X-rays, and then irradiated with a semiconductor laser beam (wavelength: 660 nm). It was, thereby, confirmed that the thus-treated phosphor gave off stimulated emission.

### [Example 14] Radiation image storage panel

### (1) Formation of phosphor sheet

| | | |
|---|---|---|
| Stimulable phosphor: | Ba_{0.99}Ca_{0.01}FBr:0.0002K,0.005Eu. | 100 g |
| Binder: | methyl ethyl ketone (MEK) solution of polyurethane elastomer (PANDEX T-5265H (solid), available from Dainippon Ink & Chemicals, Inc.) [solid content: 15 wt.%] | 23.7 g |
| Anti-yellowing agent: | epoxy resin [EPIKOTE #1004 (solid), available from Yuka Shell Epoxy Co., Ltd.] | 1.0 g |
| Crosslinking gent: | polyisocyanate [COLONATE HX (solid content: 100%), available from Nippon Polyurethane Co., Ltd.] [solid content: 71 wt.%] | 0.7 g |

The above materials were added in 13 g of methyl ethyl ketone (MEK), and mixed and dispersed by means of a propeller mixer to repare a coating solution. The prepared coating solution was pumped to send at a constant flow (210 ml/minute) and to spread on a temporary support (polyethylene terephthalate sheet having a surface beforehand coated with a silicon releasing agent) of 188 *µ*m thickness. The temporary support was then transferred into an oven, dried at 80°C for 8 minutes, and cooled. Thus, a phosphor sheet comprising the temporary support and a phosphor layer (thickness: 430 *µ*m) provided thereon was prepared.

### (2) Preparation of support

A light-shielding layer of approx. 20 *µ*m thickness [composition: carbon black, calcium carbonate, silica and binder (nitrocellulose and polyester resin) in the weight ratio of 10/21/26/53] was formed by coating procedure on one surface of a polyethylene terephthalate (PET) sheet [support, thickness: 350 *µ*m, MELINEX #992, from Du Pont Corp.] containing barium sulfate (10 wt.%). The other surface of the sheet was coated with a soft acrylic resin (CRYSCOAT P-1018GS [20% toluene solution], available from Dainippon Ink & Chemicals, Inc.) to form an undercoating layer (thickness: 20 *µ*m).

### (3) Lamination of phosphor layer

The phosphor layer was peeled from the temporary support of the phosphor sheet, laid on the undercoating layer of the support, and continuously hot-pressed by means of a calender roll (pressure: 500 kgw/cm², temperature of the upper roll: 75°C, temperature of the lower roll: 75°C, transferring rate: 1.0 m/minute), so that the phosphor layer (thickness: 330 *µ*m) was completely fixed on the support via the undercoating layer.

### (4) Formation of protective layer

A PET film (protective film, thickness: 9 *µ*m, LUMILAR 9-F53, Toray Industries, Inc.) was coated with an unsaturated polyester resin solution (BYRON 30SS, Toyobo Co., Ltd.) and dried to form an adhesive layer (applied amount: 2.0 g/m²). The thus thus treated PET film was fixed on the phosphor layer via the adhesive layer by means of laminating rolls, to provide a protective layer.

Thus, the radiation image storage panel of the invention was produced.

It was confirmed that the obtained radiation image storage panel after exposed to X-rays gave off stimulated emission when excited with a semi-conductor laser beam of 660 nm.

## Claims

1. A process for preparing precursor particles of rare earth activated barium fluorohalide phosphor represented by the following formula (I):
Ba₁₋ₐM^{II}ₐFX:zLn (I)
in which M^{II} is at least one alkaline earth metal element selected from the group consisting of Ca and Sr; X is at least one halogen atom selected from the group consisting of Cl and Br; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of O≤a≤0.5 and 0<z≤0.2, respectively;
which comprises the steps of:
(1) dissolving HaX₂, BaI₂, an Ln-containing compound and optionally an M^{II}-containing compound in an aqueous medium, to prepare a reaction mixture containing an iodine atom in a molar ratio of 0.30 to 0.80 based on total halogen atom contents,
(2) adding an aqueous fluoride solution to the reaction mixture, whereby precipitating precursor particles of rare earth activated barium fluorohalide phosphor in the reaction mixture, and
(3) separating the precursor particles from the reaction mixture.

2. The process of claim 1, wherein the reaction mixture prepared in the step (1) contains a barium atom in an amount of 1.1 to 2.3 mol/L.

3. The process of claim 1, wherein X of BaX_{z} dissolved in the step (1) is bromine.

4. The process of claim 1, wherein the Ln-containing compound dissolved in the step (1) is a cerium compound or an europium compound.

5. A process for preparing precursor particles of rare earth activated barium fluorohalide phosphor represented by the following formula (I):
Ba₁₋ₐM^{II}ₐFX: zLn (I)
in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding seed particles of barium fluorohalide to the reaction mixture, to give a dispersion,
(3) adding an aqueous fluoride solution to the dispersion, whereby causing growth of the seed particles in the dispersion to give precursor particles of rare earth activated barium fluorohalide phosphor, and
(4) separating the precursor particles from the reaction mixture.

6. The process of claim 5, wherein the halide dissolved in the step (1) is chloride or bromide and the reaction mixture contains a barium atom in an amount of 0.6 to 2.5 mol/L.

7. The process of claim 5, wherein the halide dissolved in the step (1) is iodide and the reaction mixture contains a barium atom in an amount of 2.5 to 5.0 mol/L.

8. The process of claim 5, wherein the reaction mixture is subjected to a dispersing procedure during when the seed particles are added or after the seed particles are added in the step (2).

9. The process of claim 5, wherein the reaction mixture is subjected to a ultrasonic dispersing procedure during when the seed particles are added or after the seed particles are added in the step (2).

10. The process of claim 5, wherein the seed particles of barium fluorohalide added in the step (2) has a mean particle size in the range of 0.5 to 8.0 *µ*m.

11. The process of claim 5, wherein the seed particles of barium fluorohalide added in the step (2) contains at least 70 molar % of a halogen atom other than a fluorine atom in total halogen atom contents.

12. The process of claim 5, wherein the seed particles of barium fluorohalide added in the step (2) has been produced by the steps of dissolving a barium halide and a fluoro complex in an aqueous medium, and precipitating particles of barium fluorohalide in the aqueous medium.

13. The process of claim 5, wherein the growth of the seed particles of barium fluorohalide to the precursor particles in the step (3) is 1.5 to 10 times as much as size of the seed particles.

14. A process for preparing precursor particles of rare earth activated barium fluorohalide phosphor represented by the following formula (I) :
Ba₁₋ₐM^{II}ₐFX: zLn (I)
in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding an aqueous fluoride solution to the reaction mixture, whereby producing nuclei of phosphor precursor in the reaction mixture,
(3) adding barium fluoride to the reaction mixture, whereby causing growth of the nuclei of phosphor precursor in the reaction mixture to give precursor particles of rare earth activated barium fluorohalide phosphor, and
(4) separating the precursor particles from the reaction mixture.

15. The process of claim 14, wherein the halide dissolved in the step (1) is chloride or bromide and the reaction mixture contains a barium atom in an amount of 0.6 to 2.5 mol/L.

16. The process of claim 14, wherein the halide dissolved in the step (1) is iodide and the reaction mixture contains a barium atom in an amount of 2.5 to 5.0 mol/L.

17. The process of claim 14, wherein the reaction mixture is kept at a temperature in the range of 20 to 95°C in the course of the steps (1) to (3).

18. The process of claim 14, wherein the barium fluoride is added to the reaction mixture in the form of powder or slurry in the step (3).

19. A process for preparing precursor particles of rare earth activated barium fluorohalide phosphor represented by the following formula (I):
Ba₁₋ₐM^{II}ₐFX: zLn (I)
in which M^{II} is at least one alkaline earth metal element selected from the group consisting of Ca and Sr; X is at least one halogen atom selected from the group consisting of Cl, Br and I; Ln is at least one rare earth element selected from the group consisting of Ce, Pr, Nd, Pm, Sm, Eu, Gd, Tb, Dy, Ho, Er, Tm, Yb and Lu; and a and z are numbers satisfying the conditions of 0≤a≤0.5 and 0<z≤0.2, respectively;
which comprises the steps of:
(1) dissolving a barium compound, a halide other than fluoride, an Ln-containing compound and optionally an M^{II}-containing compound in an aqueous medium, to prepare a reaction mixture,
(2) adding seed particles of barium fluorohalide to the reaction mixture, to give a dispersion,
(3) adding barium fluoride to the dispersion, whereby causing growth of the seed particles in the reaction mixture to give precursor particles, and
(4) separating the precursor particles from the reaction mixture.

20. The process of claim 19, wherein the halide dissolved in the step (1) is chloride or bromide and the reaction mixture contains a barium atom in an amount of 0.6 to 2.5 mol/L.

21. The process of claim 19, wherein the halide dissolved in the step (1) is iodide and the reaction mixture contains a barium atom in an amount of 2.5 to 5.0 mol/L.

22. The process of claim 19, wherein the reaction mixture is kept at a temperature in the range of 20 to 95°C in the course of the steps (1) to (3).

23. The process of claim 19, wherein the barium fluoride is added to the reaction mixture in the form of powder or slurry in the step (3).

24. The process of claim 19, wherein the reaction mixture is subjected to a dispersing procedure during when the seed particles are added or after the seed particles are added in the step (2).

25. The process of claim 19, wherein the reaction mixture is subjected to a ultrasonic dispersing procedure during when the seed particles are added or after the seed particles are added in the step (2).

26. The process of claim 19, wherein the seed particles of barium fluorohalide added in the step (2) has a mean particle size in the range of 0.5 to 8.0 *µ*m.

27. The process of claim 19, wherein the seed particles of barium fluorohalide added in the step (2) contains at least 70 molar % of a halogen atom other than a fluorine atom in total halogen atom contents.

28. The process of claim 19, wherein the growth of the seed particles to the precursor particles is 1.5 to 10 times as much as size of the seed particles.
